# EUROPEAN PATENT SPECIFICATION

(11) **EP 3 900 904 B1**
(45) Date of publication and mention of the grant of the patent: **15.03.2023**
(21) Application number: 21167858.6
(22) Date of filing: 12.04.2021
(51) Int. Cl.: B28B 19/00, B32B 7/12, B32B 9/00, B32B 13/04

(54) **METHOD FOR MANUFACTURING A PAVING ELEMENT**
VERFAHREN ZUR HERSTELLUNG EINES PFLASTERELEMENTS
PROCÉDÉ DE FABRICATION D'UN ÉLÉMENT DE PAVAGE

(30) Priority: 21.04.2020 NL 2025389
(43) Date of publication of application: 27.10.2021
(73) Proprietor: Excluton B.V., 6651 KD Druten (NL)
(72) Inventor: ORDELMAN, Peter, 6651 KD Druten (NL)
(74) Representative: Jilderda, Anne Ayolt

(56) References cited:
- DE-A1-102017 111 248
- NL-A- 7 305 809
- US-A- 2 270 555
- US-A1- 2009 049 793

## Description

The present invention relates to a method for manufacturing a composite paving element, comprising a concrete body and a tile body which provides a visible side, wherein a mould is provided which has a mould cavity bounded by a mould bottom and upright walls, wherein the tile body is arranged in the mould cavity with the visible side of the tile body directed toward the mould bottom, wherein a back side of the tile body is provided with an adhesive layer, wherein the mould is filled with a concrete mortar, and wherein the concrete mortar is compacted into the concrete body.

Such a method is for instance known from European patent application EP 3.216.776 and is described therein for manufacturing a laminate tile. This known tile comprises a concrete base body with an open structure on which ceramic tile is glued via a suitable adhesive. In the known product use is made for the adhesive of a liquid layer for forming a foamed polymer, particularly a polyurethane foam. For manufacture thereof, the tile is placed in a suitable mould with the back side thereof directed upward and the adhesive layer is applied over the whole back side. A concrete mortar is then poured onto the adhesive layer and compacted briefly with a pressure of a maximum of 0,8 MPa (≈80 tons/m²) so that an open structure thereof is preserved. The polymer layer here penetrates into the pores of the concrete so as to ensure a sufficient adhesion. After the concrete body has cured sufficiently, and is therefore sufficiently form-retaining, it is removed from the mould and fully cured in a climate room. German patent application DE 10 2017 111 248 discloses a method by which a ceramic tile body is pressed on top of a concrete body. The ceramic tile body adheres to the concrete body by means of an intervening adhesive layer that extend over the entire back side of the tile body. US patent application US 2009/0049793 discloses a similar method of forming a laminated tile. A disadvantage of these known methods is that the visible side of the ceramic tile body is being contacted by the press which may damage the visible side. Moreover, the adhesive layer may be expelled unintentionally from in between the concrete body and the tile body under pressure of the press.

A method of forming a composite building block is known from US patent USP 2,270,555 in which a cementious body is formed on the back side of an ornamental vitreous face plate. Metal holders act as a mould and are maintained as a rim surroudning the final assembly of the face plate and the subjacent cementious body. Likewise Dutch patent NL 7 305 809 discloses a method for manufacturing a composite paving element in accordance with the preamble of claim 1, more precisely it discloses a concrete body being formed on the backside of a polyester face plate that offers a polyester adhesive layer to connect to the concrfete body The polvster face plate is provided at its back side all around with an upright wall that adds significantly to its production cost and complexity.

A drawback of the method known from European patent application EP 3.216.776 is that the mould is occupied during the partial curing of the concrete body, and is thereby unavailable for the production of a subsequent paving element. This considerably reduces the production capacity and thereby results in higher production costs.

The present invention has for its object to provide a method which obviates this drawback to at least significant extent.

In order to achieve the stated object a method of the type described in the preamble has the feature according to the invention that the tile body comprises on the back side an inner area as well as a peripheral area extending all around the inner area, that the adhesive layer is provided in the inner area and outside the peripheral area, that the concrete mortar is compacted into the concrete body at a pressure of more than 0,8 MPa (≈80 tons/m²), particularly at a pressure of between 1 and 15 MPa (≈100-1500 tons/m²), and preferably at a pressure of between about 1,0 and 1,2 MPa (≈100-120 tons/m²), and that the concrete body is formed to adjacent the peripheral area of the tile body, wherein a flowing adhesive mortar is applied as the adhesive layer.

In the method according to the invention a relatively high pressure force is thus applied to compact the concrete mortar into the concrete body. The concrete body is thereby almost immediately form-retaining enough to be removed from the mould. The mould is thus available again almost immediately for production of a subsequent concrete body. This higher compacting pressure moreover contributes to the adhesion of the adhesion of the adhesive layer to the tile body on one side and the concrete body on the other.

By having the concrete body extend up to the peripheral area of the tile body it provides a sealing edge all around, which prevents the adhesive layer from being pressed away from between the concrete body and the tile body at said high pressure. The thus obtained paving element has been found to be resistant to extreme weather conditions, and particularly frost, without resulting in delamination.

Particularly good results have been achieved with a particular embodiment of the method according to the invention, which is characterized in that use is made for the adhesive mortar of a sand cement mortar with porous mineral granules therein as additive, particularly expanded clay granules. Due to the flowing character of the adhesive mortar it can be processed into a thin adhesive layer, and the layer adapts without problem to a possible relief or surface structure of the bodies to be mutually adhered.

A preferred embodiment of the method has the feature here that use is made in the additive substantially only of mineral granules with a granule size of between 0 and 4 millimetres. In addition to sand and cement, the mortar comprises here a particularly fine-grain additive which is present in the mixture distributed homogeneously such that a smooth adhesive layer can be obtained thereby. This layer has been found to be particularly well able to accommodate possibly varying expansion and contraction behaviour between the tile body on one side and the concrete body on the other.

In order to keep the peripheral area free of the adhesive mortar a particular embodiment of the method has the feature according to the invention that an edge defines the peripheral area in the mould, that the adhesive mortar is distributed inside the edge before arranging the concrete mortar and that the edge is removed before filling the mould cavity with the concrete mortar. The edge can here temporarily form part of the mould, or of a die with which the mortar is compacted and formed into the adhesive layer. Because the edge is removed afterward, before the concrete mortar is arranged, the concrete will automatically fill the empty space defined by the edge up to the peripheral area of the back side of the tile body.

With a view to a weight saving of the paving element a further preferred embodiment of the method has the feature according to the invention that use is made for the concrete body of a concrete mortar with porous granules therein as additive, particularly expanded clay granules as additive, and more particularly that use is made substantially only of mineral granules with a granule size of below 4 millimetres in the additive of the concrete mortar. The porous granules provide mainly volume to the concrete body, while the increase in overall weight of the finished product is relatively small. Not only is this advantageous in transport and storage; more significantly, working the product into a paving is thereby easier. Larger elements can hereby be used within current labour standards and/or a physical load on workers is smaller. The porous granules moreover contribute to a draining, water-permeable capacity of the concrete body.

Although a large part of the paving element can thus be composed of concrete, the invention allows the visible side to have a completely different appearance. In a further preferred embodiment the method in this respect has the feature according to the invention that for the tile body a tile body is provided which comprises a ceramic layer on the visible side. An outdoor patio or driveway can thus be paved with ceramic tiles which are weather-resistant and are composed to a considerable extent, particularly even substantially, of concrete. An outdoor tile paving can thus particularly be in keeping with an indoor tile floor.

The invention will be further elucidated hereinbelow on the basis of an exemplary embodiment and an accompanying drawing. In the drawing:

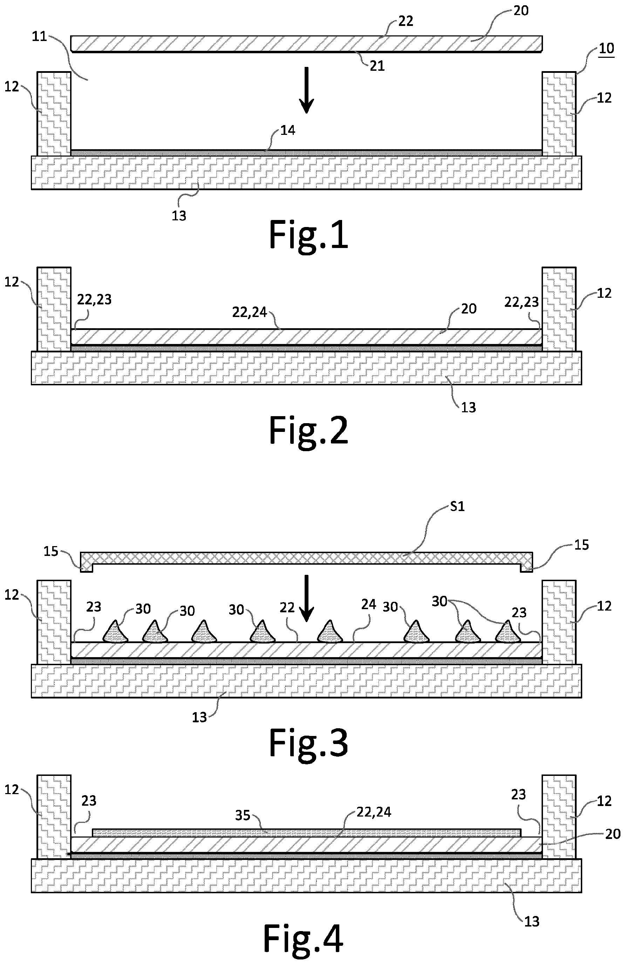

- Figures 1-7: show the production of a paving element in successive stages of manufacture according to an exemplary embodiment of the method according to the invention in side view.

It is otherwise noted that the figures are purely schematic and not always drawn to (the same) scale. Some dimensions in particular may be exaggerated to greater or lesser extent for the sake of clarity. Corresponding parts are designated in the figures with the same reference numeral.

Figure 1 shows schematically a part of a mould 10 in which a paving element according to the invention can be composed. For the purpose of an adequate lifespan the mould takes a relatively heavy form and the walls 12 and bottom 13 which enclose a mould cavity 11 are for instance manufactured from steel. The bottom is preferably covered with a relatively soft and flexible material 14, such as for instance an optionally natural rubber, to protect the product to be manufactured and for an adequate seal.

A tile body 20 is placed in mould cavity 11 with a visible side 21 thereof facing downward, see figure 2. A back side 22 of tile body 20 points upward and now forms a mould bottom which connects closely to the walls 12 of the mould. Tile body 20 typically has a square section with sides of 60 centimetres and here has a thickness in the order of 15 millimetres. It will however be apparent that the invention per se imposes no limitations in respect of the dimensions and/or shape of the tile body and the paving element formed thereby.

A measured quantity of a relatively thin liquid, flowing adhesive mortar 30 is placed in the inner area on the back side 22 of the tile body, see figure 3. In this embodiment this adhesive mortar 30 comprises an aqueous mixture of sand, gravel and cement to which a quantity of expanded clay granules has been added. If desired, other types of porous mineral granules can also be applied for this purpose. A maximum granule size of 4 millimetres is maintained here in adhesive mortar 30, i.e. granules substantially all of which drop through a screen with a screen size of 4 millimetres.

Adhesive mortar 30 is formed into a conformal yet relatively wet adhesive layer 35 at a low compacting pressure in the order of 0,2 to 0,5 MPa (≈20-50 tons/m²) with a distributing block S1, see figure 4. For this purpose the distributing block vibrates laterally in order to form the mortar 30 into a continuous layer 35. A flange 15 which is formed all around on the distributing block S1 prevents the adhesive layer from being able to flow to a peripheral area 23 of the tile body here. This peripheral area 23 extends all around over the whole periphery of tile body 20 and bounds an inner area 24 lying within it. Adhesive layer 35 typically has a thickness of 5 to 15 millimetres and extends over practically the whole inner area 24 of the back side of tile body 20, but thus leaves the peripheral area 23 clear.

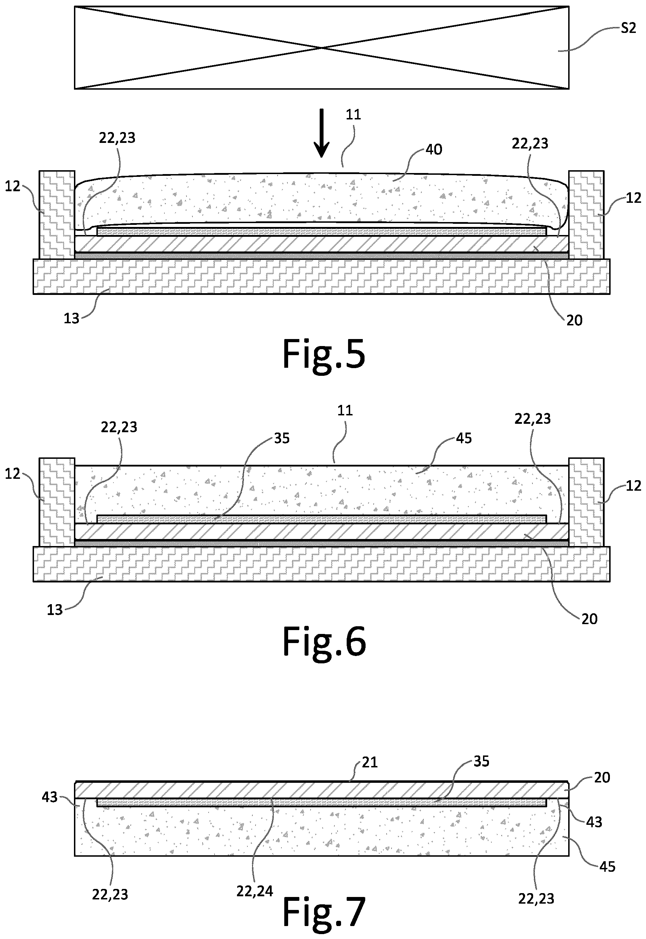

A quantity of concrete mortar 40 is then placed in the mould, whereby mould cavity 11 is filled to a desired level, see figure 5. For the concrete mortar use is made of an earth-moist mixture of sand, cement and gravel with therein porous mineral granules as additive. In this case use is in the latter respect also made of expanded clay granules, although other types of lightweight granules could also be applied here. Compared to the adhesive mortar, the concrete mortar is considerably drier and the additive therein has a coarser structure. In this example porous clay granules having an granule size of between 2 and 8 millimetres are applied as additive, i.e. granules substantially all of which drop through at a screen size of 8 millimetres, and substantially none of which drop through in a screen with a screen size smaller than 2 millimetres.

With a press S2 the poured concrete mass 40 is compacted at a pressure of more than 0,8 MPa, and typically between 1 and 15 MPa (≈100-1500 tons/m²), into a cohesive concrete body 45, see figure 6. In this example a pressure force of between 1,0 and 1,2 MPa (≈100-120 tons/m²) is applied. The concrete mass 40 here also penetrates to the peripheral area 23, between the adhesive layer 35 and wall 12 of mould cavity 11, and comes into contact with the back side 22 of tile body 20. Concrete body 45 thus forms a surrounding edge 43 and thereby encloses the adhesive layer 35. This prevents the adhesive mortar from exiting the product, despite the considerable pressure force applied in order to form concrete body 45.

Owing to this high pressure force and relatively dry concrete mortar, the concrete body 45 has a form-retention, and the paving element is sufficiently cohesive, such that it can be removed from the mould almost immediately following the concrete compaction. The finished product, see figure 7, can then be collected in a climate room and fully cure therein, typically for twenty-four hours. The concrete body typically has a thickness of 3 to 12 centimetres. In this respect use is in this embodiment made of a concrete body with a thickness of about 6 centimetres.

Although the invention has been further elucidated above with reference to only a single exemplary embodiment, it will be apparent that the invention is by no means limited thereto. On the contrary, many variations and embodiments are still possible within the scope of the invention for the person with ordinary skill in the art. The given dimensions and shapes particularly serve only by way of example, and other shapes and dimensions are also possible within the scope of the invention.

The embodiment is thus based on a square paving element with a size of 60 by 60 centimetres, but other dimensions, typically from 30x30 to 120x120 centimetres, and particularly also other polygonal shapes, particularly rectangular, hexagonal and orthogonal, are also possible within the scope of the invention. In respect of the thickness it is also possible to make use of a thicker or thinner dimension for the tile body, typically between 5 millimetres and several centimetres, and instead of a ceramic tile use can for instance also be made of a tile of natural stone or other hard material. The concrete body is typically embodied in a thickness of 3 centimetres to 20 centimetres.

If desired, a mortar with a different composition can be applied for both the adhesive layer and the concrete body, and polymer layers can also be envisaged as adhesive layer. In addition to durability and resistance to weather influences, a significant demand made thereof is that the adhesive layer is able to accommodate a possible difference in expansion between the tile and the concrete body in order to prevent stresses which could otherwise result in delamination.

All in all, the invention provides a method whereby a wide range of paving elements with the appearance of an optionally ceramic tile can be produced in particularly efficient manner.

## Claims

1. Method for manufacturing a composite paving element, comprising a concrete body (45) and a tile body (20) which provides a visible side (21), wherein a mould (10) is provided which has a mould cavity (11) bounded by a mould bottom (13) and upright walls (12), wherein the tile body (20) is arranged in the mould cavity (11) with the visible side (21) of the tile body (20) directed toward the mould bottom (13), wherein a back side (22) of the tile body (20) is provided with an adhesive layer (30,35), wherein the mould is filled with a concrete mortar (40), and wherein the concrete mortar (40) is compacted into the concrete body (45), wherein the tile body (20) comprises on the back side (22) an inner area (24) as well as a peripheral area (23) extending all around the inner area (24), that the adhesive layer (30) is provided in the inner area (24) and outside the peripheral area (23), that the concrete mortar (40) is compacted into the concrete body (45) at a pressure of more than 0,8 MPa (≈80 tons/m²), particularly at a pressure of between 1 and 15 MPa (≈100-1500 tons/m²), and preferably at a pressure of between about 1,0 and 1,2 MPa (≈100-120 tons/m²), and that the concrete body (45) is formed to adjacent the peripheral area (23) of the tile body (20), **characterized in that** a flowing adhesive mortar (30) is applied as the adhesive layer (35).

2. Method according to claim 1, **characterized in that** use is made for the adhesive mortar (30) of a sand cement mortar with porous mineral granules therein as additive, particularly expanded clay granules.

3. Method according to claim 2, **characterized in that** use is made in the additive substantially only of mineral granules with a granule size of below 4 millimetres.

4. Method according to claim 1, 2 or 3, **characterized in that** an edge (15) defines the peripheral area (23) in the mould (10), that the adhesive mortar (30) is compacted inside the edge (15) before arranging the concrete mortar (40) and that the edge (15) is removed before filling the mould cavity (11) with the concrete mortar (40).

5. Method according to one or more of the preceding claims, **characterized in that** use is made for the concrete body (45) of a concrete mortar (40) with porous granules therein as additive, particularly expanded clay granules as additive.

6. Method according to claim 5, **characterized in that** at least almost exclusive use is made of mineral granules with a granule size of between 2 and 8 millimetres in the additive of the concrete mortar.

7. Method according to one or more of the preceding claims, **characterized in that** for the tile body (20) a tile body is provided which comprises a ceramic layer on the visible side (21).

## Patentansprüche

1. Verfahren zum Herstellen eines zusammengesetzten Pflasterelementes, umfassend einen Betonkörper (45) und eine Platte (20) mit einer sichtbaren Seite (21), wobei eine Form (10) mit einem Formnest (11) vorgesehen ist, begrenzt durch einen Formboden (13) und stehende Wände (12); die Platte (20) ist im Formnest (11) mit der sichtbaren Seite (21) der Platte (20) dem Formboden (13) zugewandt; eine Rückseite (22) der Platte (20) wird mit einer Klebstoffschicht (30, 35) versehen, wobei die Form mit einem Betonmörtel (40) ausgefüllt wird und der Formmörtel (40) in den Betonkörper (45) eingebracht wird, wobei die Platte (20) eine Rückseite (22), einen Innenbereich (24) sowie einen Umfangsbereich (23) umfasst, der sich um den Innenbereich (24) erstreckt, wobei die Klebstoffschicht (30) im Innenbereich (24) und außerhalb des Umfangsbereiches vorgesehen wird, wobei der Betonmörtel (40) bei einem Druck von mehr als 0,8 MPa (≈ 80 t/m²) kompaktiert wird, insbesondere bei einem Druck von zwischen 1 und 15 MPa (≈ 100-1500 t/m²), vorzugsweise bei einem Druck von zwischen 1,0 und 1,2 MPa (≈ 100-120 t/m² ), wobei der Betonkörper (45) benachbart dem Umfangsbereich (23) der Platte (20) ausgeformt wird, **dadurch gekennzeichnet, dass** ein fließender klebender Mörtel (30) auf die Klebstoffschicht (35) aufgebracht wird.

2. Verfahren nach Anspruch 1, **dadurch gekennzeichnet, dass** als klebender Mörtel (30) ein Sandzementmörtel mit porösen Mineralkörnern als Additiv verwendet wird, insbesondere expandierte Lehmkörner.

3. Verfahren nach Anspruch 2, **dadurch gekennzeichnet, dass** als Additiv im Wesentlichen nur Mineralkörner von einer Korngröße von unter 4 mm verwendet wird.

4. Verfahren nach den Ansprüchen 1, 2 oder 3, **dadurch gekennzeichnet, dass** eine Kante (15) den Umfangsbereich (23) in der Form (10) definiert, dass der klebende Mörtel (30) innerhalb der Kante (15) kompaktiert wird, vor Anordnen des Betonmörtels (40), und dass die Kante (15) vor dem Befüllen des Formnestes (11) mit dem Betonmörtel (40) entfernt wird.

5. Verfahren nach einem oder mehreren der vorausgegangenen Ansprüche, **dadurch gekennzeichnet, dass** als Betonkörper (45) ein Betonmörtel (40) mit porösen Körnern als Additiv verwendet wird, insbesondere expandierte Lehmkörner.

6. Verfahren nach Anspruch 5, **dadurch gekennzeichnet, dass** wenigstens fast ausschließlich Mineralkörner mit einer Korngröße von zwischen 2 und 8 mm im Additiv des Betonmörtels verwendet wird.

7. Verfahren nach einem oder mehreren der vorausgegangenen Ansprüche, **dadurch gekennzeichnet, dass** die Platte (20) eines Plattenkörpers verwendet wird, umfassend eine keramische Schicht auf der sichtbaren Seite (21).

## Revendications

1. Procédé de fabrication d'un élément de pavage composite, comprenant un corps en béton (45) et un corps de carreau (20) qui présente une face visible (21), dans lequel il est prévu un moule (10) qui présente une cavité de moule (11) délimitée par un fond de moule (13) et des parois verticales (12), dans lequel le corps de carreau (20) est disposé dans la cavité de moule (11) avec la face visible (21) du corps de carreau (20) dirigée vers le fond de moule (13), dans lequel une face arrière (22) du corps de carreau (20) est pourvue d'une couche adhésive (30, 35), dans lequel le moule est rempli d'un mortier de béton (40), et dans lequel le mortier de béton (40) est compacté dans le corps en béton (45), dans lequel le corps de carreau (20) comprend sur le côté arrière (22) une zone intérieure (24) ainsi qu'une zone périphérique (23) s'étendant tout autour de la zone intérieure (24), la couche adhésive (30) étant prévue dans la zone intérieure (24) et à l'extérieur de la zone périphérique (23), le mortier de béton (40) est compacté dans le corps de béton (45) à une pression supérieure à 0,8 MPa (=80 tonnes/m2), en particulier à une pression comprise entre 1 et 15 MPa (=100-1500 tonnes/m2), et de préférence à une pression comprise entre environ 1,0 et 1,2 MPa (=100-120 tonnes/m2), et le corps de béton (45) est formé pour être adjacent à la zone périphérique (23) du corps de carreau (20), **caractérisé en ce qu'**un mortier adhésif fluide (30) est appliqué comme couche adhésive (35).

2. Procédé selon la revendication 1, **caractérisé en ce que** l'on utilise pour le mortier adhésif (30) un mortier de ciment sableux contenant des granulés minéraux poreux comme additif, en particulier des granulés d'argile expansée.

3. Procédé selon la revendication 2, **caractérisé en ce que** l'on utilise dans l'additif essentiellement uniquement des granulés minéraux dont la taille des granulés est inférieure à 4 millimètres.

4. Procédé selon la revendication 1, 2 ou 3, **caractérisé en ce qu'**un bord (15) définit la zone périphérique (23) dans le moule (10), **en ce que** le mortier adhésif (30) est compacté à l'intérieur du bord (15) avant de disposer le mortier de béton (40) et **en ce que** le bord (15) est retiré avant de remplir la cavité de moule (11) avec le mortier de béton (40).

5. Procédé selon une ou plusieurs des revendications précédentes, **caractérisé en ce que** l'on utilise pour le corps en béton (45) d'un mortier de béton (40) des granulés poreux en tant qu'additif, en particulier des granulés d'argile expansée en tant qu'additif.

6. Procédé selon la revendication 5, **caractérisé en ce qu'**on utilise au moins presque exclusivement des granulés de minerai ayant une taille de granulés comprise entre 2 et 8 millimètres dans l'additif du mortier de béton.

7. Procédé selon une ou plusieurs des revendications précédentes, **caractérisé en ce que** pour le corps de carreau (20), on prévoit un corps de carreau qui comprend une couche de céramique sur la face visible (21).
